# EUROPEAN PATENT APPLICATION

(11) **EP 4 772 814 A1**
(43) Date of publication of application: **08.07.2026**
(21) Application number: 24872445.2
(22) Date of filing: 26.09.2024
(51) Int. Cl.: F25D 23/00, B01D 53/02, F25D 21/14

(54) **STORAGE SYSTEM AND INTERNAL COOLING SYSTEM**

(30) Priority: 28.09.2023 JP 2023167719
(71) Applicant: Daikin Industries, Ltd., Osaka-shi, Osaka 530-0001 (JP)
(72) Inventor: TOMITA, Chiharu, Osaka-shi, Osaka 530-0001 (JP); HIRATA, Wataru, Osaka-shi, Osaka 530-0001 (JP)
(74) Representative: Hoffmann Eitle
(86) International application number: PCT/JP2024/034522
(87) International publication number: WO 2025/070661

(57) **Abstract**

A storage system, which is to be provided in a storage (1) in which air in a first space (3) in a first casing (2) is cooled by a refrigeration apparatus (10), includes: a second casing (61) being disposed in the first space (3) and forming a second space (62) in which a storage object is to be stored; an air control apparatus (50) configured to adjust a composition of air to be supplied to the second space (62); a gas supply path (275) configured to supply the second space (62) with a first gas including air having a composition adjusted by the air control apparatus (50); and a cooling mechanism (70) provided in at least a part of the gas supply path (275) and configured to cool the first gas.

## Description

### TECHNICAL FIELD

The present disclosure relates to a storage system and an interior cooling system.

### BACKGROUND ART

Patent Literature 1 describes a method of storing a fruit or vegetable. In the method, a plurality of containers in which fruits or vegetables are housed are disposed in a refrigerating chamber, and a predetermined storage gas is supplied into each container (housing space) via a hose. The containers are thus disposed in the refrigerating chamber to provide housing spaces separated in the refrigerating chamber, and the air composition in the housing spaces is adjusted to be optimum for storage of a fruit or vegetable.

### CITATION LIST

### PATENT LITERATURE

Patent Literature 1: Japanese Patent Application Laid-Open Publication No. S60-30638

### SUMMARY OF THE INVENTION

### TECHNICAL PROBLEM

Although the storage method of Patent Literature 1 enables adjustment of the air composition inside a container (housing space) disposed in a storage such as a refrigerating chamber, the air temperature in the housing space only depends on the air temperature in the storage, and the temperature in the housing space cannot be appropriately controlled.

An object of the present disclosure is to appropriately control the temperature in a housing space sectioned off inside a storage.

### SOLUTION TO THE PROBLEM

A first aspect is
a storage system including:
a second casing (61) disposed in a first space (3), the second casing (61) forming a second space (62) in which a storage object is to be stored;
an air control apparatus (50) configured to adjust a composition of air to be supplied to the second space (62);
a gas supply path (275) configured to supply the second space (62) with a first gas including air having a composition adjusted by the air control apparatus (50); and
a cooling mechanism (70) provided in at least a part of the gas supply path (275), the cooling mechanism (70) configured to cool the first gas,
wherein the storage system is provided in a storage (1) in which air in the first space (3) in a first casing (2) is cooled by a refrigeration apparatus (10).

In the first aspect, the first gas cooled by the cooling mechanism (70) can be supplied to the second space (62). Thus, the air temperature in the second space (62) can be controlled more appropriately than in the case of adjusting the air temperature in the second space (62) by using only the interior air cooled by the refrigeration apparatus (10).

According to a second aspect, in the first aspect,
the cooling mechanism (70) is configured to cool the first gas in the gas supply path (275) by using air in the first space (3).

In the second aspect, the cooling mechanism (70) can cool the first gas by transferring heat from the first gas passing through the gas supply path (275) to the cooled air in the first space (3). Thus, the cooling mechanism (70) does not need to be provided with a special apparatus, and can easily cool the first gas.

According to a third aspect, in the first or the second aspect,
the cooling mechanism (70) includes a first pipe portion (70) forming a part of the gas supply path (275), and
the first pipe portion (70) is formed of a material having a higher thermal conductivity than a material forming the gas supply path (275) excluding the first pipe portion (70).

In the third aspect, in the first pipe portion (70) of the gas supply path (275), cooling of the first gas is promoted by the cooled air in the first space (3). Thus, the first gas can be easily cooled by using a part of the gas supply path (275).

According to a fourth aspect, in the first or the second aspect,
the cooling mechanism (70) includes the first pipe portion (70) made of a metal or glass and forming at least a part of the gas supply path (275).

In the fourth aspect, the first pipe portion (70) has a relatively high thermal conductivity, so that the first gas passing through the first pipe portion (70) can be quickly cooled.

According to a fifth aspect, in any one of the first to the fourth aspects,
the storage system further includes a gas-liquid separator (80) configured to separate the first gas flowing through the gas supply path (275) and a liquid flowing together with the first gas, and
the gas-liquid separator (80) is disposed downstream in a flow direction of the first gas in the cooling mechanism (70), or the gas-liquid separator (80) is disposed downstream of the cooling mechanism (70) in the flow direction of the first gas.

In the fifth aspect, only the first gas can be supplied to the second space (62), and it is possible to suppress inflow of the liquid passing through the gas supply path (275) into the second space (62). Thus, it is possible to suppress falling of water on a storage object stored in the second space (62) and suppress deterioration of the quality of the storage object.

According to a sixth aspect, in any one of the first to the fifth aspects,
the air control apparatus (50) is configured to adjust the first gas to be supplied to the second space by using a system of adsorption and desorption of gas molecules with a zeolite or a metal-organic framework (MOF).

In the sixth aspect, a nitrogen-enriched gas or air having a relatively high humidity can be supplied as the first gas to the second space (62) by using the system of adsorption and desorption of gas molecules with a zeolite.

According to a seventh aspect, in any one of the first to the sixth aspects,
the first casing (2) is formed of a material having a higher heat insulation property than the second casing (61).

In the seventh aspect, a temperature rise of the air in the first space (3) can be suppressed, and heat transfer between the first space (3) and the second space (62) can be promoted. Thus, the air temperature in the second space (62) can be cooled relatively quickly by the air cooled in the first space (3).

According to an eighth aspect, in any one of the first to the seventh aspects,
the second casing (61) includes a transparent material that enables visual recognition of an inside of the second space (62).

In the eighth aspect, the storage object in the second space (62) can be visually recognized from the outside of the second casing (61) without entering the second space (62).

According to a ninth aspect, in any one of the first to the eighth aspects,
a plurality of the second casings (61) are disposed in the first space (3),
the gas supply path (275) includes:
   a first flow path (275A) having one end connected to the air control apparatus (50); and
   a plurality of second flow paths (275B) having ends connected to another end of the first flow path (275A) respectively and having other ends connected to the plurality of the second casings (61) respectively, and
   the cooling mechanism (70) is provided in the first flow path (275A).

In the ninth aspect, for example, to remove a target storage object, it is only necessary to open the second casing (61) storing the target storage object, while another second casing (61) remains closed. Therefore, it is possible to suppress a change in the air composition in the second space (62) of another second casing (61).

A tenth aspect is an interior cooling system including:
a storage system (60) according to any one of the first to the ninth aspects;
a first casing (2) forming the first space (3) in which the second casing (61) is disposed; and
a refrigeration apparatus (10) configured to cool air in the first space (3).

According to the tenth aspect, an interior cooling system can be provided that includes the storage system (60), the first casing (2), and the refrigeration apparatus (10).

According to an eleventh aspect, in the tenth aspect,
a plurality of the storage systems (60) are provided in the first space (3).

In the eleventh aspect, for example, the air in a plurality of the second spaces (62) can be individually adjusted to a target air composition. Therefore, a plurality of kinds of storage objects under different storage conditions can be stored in one storage (1).

### BRIEF DESCRIPTION OF THE DRAWINGS

FIG. 1 is a longitudinal sectional view of a storage, schematically illustrating a configuration of a storage system and an interior cooling system according to an embodiment.
FIG. 2 is a piping system diagram of a refrigeration apparatus.
FIG. 3 is a perspective view schematically illustrating a configuration of a housing unit.
FIG. 4 is a piping system diagram of an air control apparatus.
FIG. 5 is a block diagram of main devices of a refrigeration apparatus and an air control apparatus.
FIG. 6 is a view schematically illustrating a longitudinal section of a gas-liquid separator.
FIG. 7 is a diagram illustrating an air control apparatus that performs a first action during an oxygen concentration reducing operation, and corresponding to FIG. 4.
FIG. 8 is a diagram illustrating an air control apparatus that performs a second action during an oxygen concentration reducing operation in a state corresponding to FIG. 4.
FIG. 9 is a diagram illustrating an air control apparatus that performs a first action during an oxygen supply operation in a state corresponding to FIG. 4.
FIG. 10 is a diagram illustrating an air control apparatus that performs a second action during an oxygen supply operation in a state corresponding to FIG. 4.
FIG. 11 is a view schematically illustrating a part of a configuration of an interior cooling system according to Modification 1.
FIG. 12 is a view schematically illustrating a part of a configuration of an interior cooling system according to Modification 2.

### DESCRIPTION OF EMBODIMENTS

Embodiments of the present invention are described below with reference to the drawings. The following embodiments are preferable examples in nature and are not intended to limit the scope of the present invention, products to which the present invention is applied, or the use of the present invention. Configurations in the embodiments, modifications, other examples, and the like described below may be combined or partially substituted within a range where the present invention is implementable.

### (1) Interior cooling system

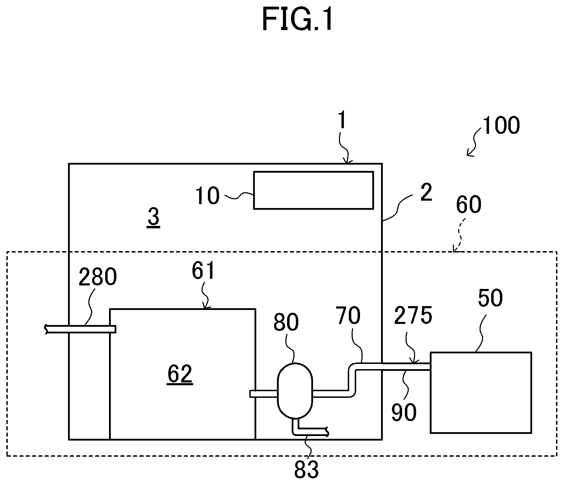

As illustrated in FIG. 1, an interior cooling system (100) of the present embodiment is applied to a storage (1). The storage (1) stores a storage object such as a fruit or vegetable (a fruit, a vegetable), a fresh food such as a fresh fish or meat, a grain, or a flower. The storage (1) is, for example, a stationary storage configured to store a fruit or vegetable. The interior cooling system (100) includes a storage (1), a refrigeration apparatus (10), and a storage system (60).

The storage (1) has an interior space (3). The interior space (3) is an example of a first space (3). The storage (1) includes a storage body (2) forming the interior space (3). The storage body (2) is an example of a first casing (2). The storage body (2) is provided with a heat insulating member (not illustrated). Thus, the storage body (2) has a heat insulation property against exterior air.

The refrigeration apparatus (10) cools air in the interior space (3) (also referred to as interior air). Details of the refrigeration apparatus (10) will be described below.

The storage system (60) includes a housing unit (61) provided to partition the interior space (3). The housing unit (61) has a housing space (62) inside it. The housing space (62) is an example of a second space (62). The storage system (60) includes an air control apparatus (50). The air control apparatus (50) is an apparatus configured to provide so-called controlled atmosphere (CA). The air control apparatus (50) adjusts the composition of the air outside the storage (1).

### (2) Refrigeration apparatus

The refrigeration apparatus (10) includes a utilization unit and a heat source unit. The utilization unit and the heat source unit are connected to each other by a connection pipe (refrigerant pipe).

The utilization unit is disposed in the interior space (3). The utilization unit includes an interior heat exchanger (29), an interior fan (30), and an expansion valve (31). The interior heat exchanger (29) cools the interior air. The interior fan (30) sends the interior air to the interior heat exchanger (29).

The heat source unit includes a compressor (25), an exterior heat exchanger (26), and an exterior fan (27). The compressor (25) compresses a sucked refrigerant and discharges the compressed refrigerant to a refrigerant pipe. The exterior heat exchanger (26) radiates heat to the exterior air. The exterior fan (27) sends the exterior air to the exterior heat exchanger (26).

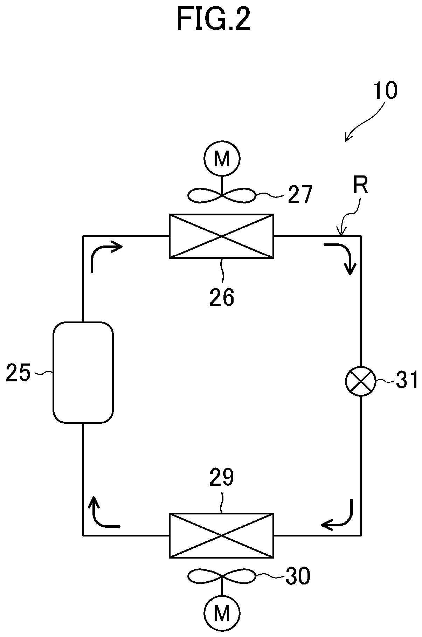

As illustrated in FIG. 2, the compressor (25), the exterior heat exchanger (26), the expansion valve (31), and the interior heat exchanger (29) are connected by a pipe to form a refrigerant circuit (R). Actuation of the compressor (25) causes circulation of the refrigerant through the refrigerant circuit (R), and thus a vapor compression refrigerant cycle is performed.

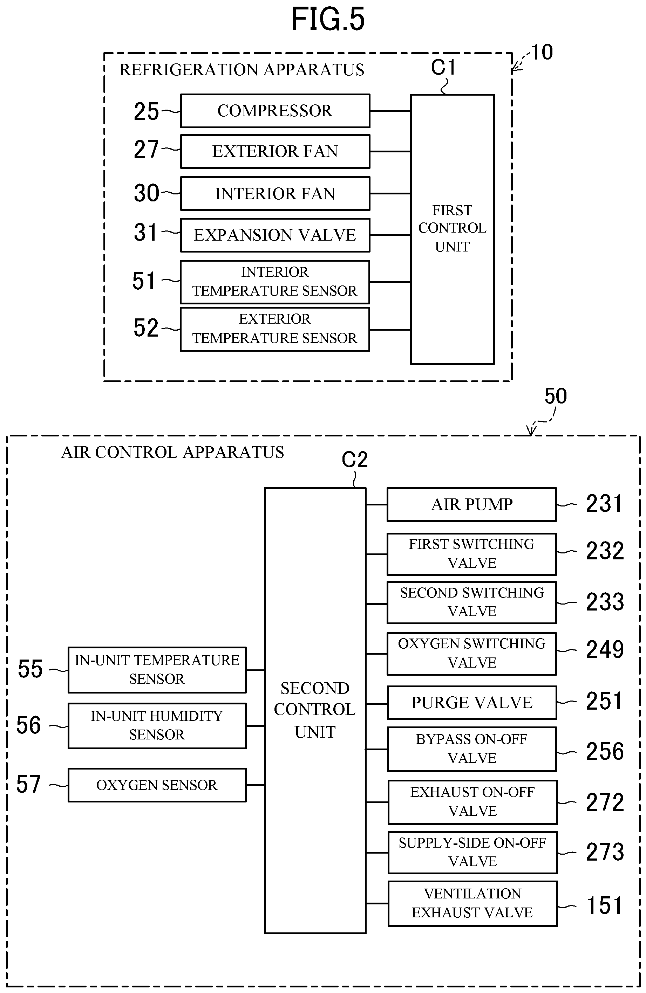

As illustrated in FIG. 5, the refrigeration apparatus (10) includes an interior temperature sensor (51) and an exterior temperature sensor (52). The interior temperature sensor (51) detects the temperature of the interior air in the storage (1). The exterior temperature sensor (52) detects the temperature of the exterior air outside the storage (1).

As illustrated in FIG. 5, the refrigeration apparatus (10) includes a first control unit (C1). The first control unit (C1) includes a micro processor, an electric circuit, and an electronic circuit. The micro processor includes a central processing unit (CPU), a memory, a communication interface, an analog input/output, and a contact input/output interface. The memory stores various programs to be executed by the CPU and data used by the programs.

The first control unit (C1) controls various devices of the refrigeration apparatus (10). Specifically, the first control unit (C1) controls the number of rotations of the compressor (25), the number of rotations of the interior fan (30), the number of rotations of the exterior fan (27), the opening degree of the expansion valve (31), and the like. The first control unit (C1) receives measurement values from the interior temperature sensor (51) and the exterior temperature sensor (52).

### (3) Storage system

As illustrated in FIG. 1, the storage system (60) is provided in the storage (1) in which the air in the interior space (3) inside the storage body (2) is cooled by the refrigeration apparatus (10).

The storage system (60) includes the housing unit (61), the air control apparatus (50), a gas supply pipe (275), and a cooling mechanism (70).

### (3-1) Housing unit

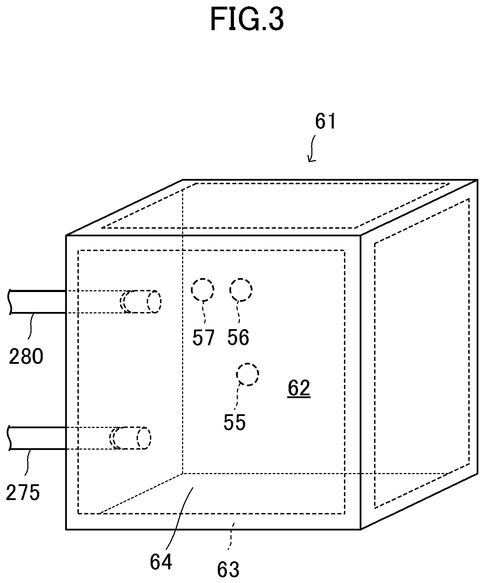

As illustrated in FIGS. 1 and 3, the housing unit (61) is disposed in the interior space (3). The housing unit (61) stores a storage object. The housing unit (61) is formed into a box shape. The housing unit (61) is an example of a second casing (61). The housing unit (61) forms the housing space (62) inside it. In the housing space (62), a storage object is to be stored. The housing space (62) is an example of the second space (62).

The housing unit (61) includes a transparent material that enables visual recognition of the inside of the housing space (62) from the outside. Specifically, each surface of the housing unit (61) includes a rectangular frame portion (63) and a resin sheet (64) covering an inner frame of the frame portion (63). The housing unit (61) is formed to have no gaps between surfaces. Thus, the airtightness of the housing space (62) is maintained. The upper surface of the housing unit (61) is formed to be detachable from the housing unit (61). When the upper surface of the housing unit (61) is removed, a fruit or vegetable can be housed in or removed from the housing unit (61). Thus, the housing unit (61) includes the resin sheet (64) and the frame portion (63), and therefore has a lower heat insulation property than the storage body (2) of the storage (1). In other words, the storage body (2) is formed of a material having a higher heat insulation property than the housing unit (61).

To the housing unit (61), the gas supply pipe (275) and a ventilation exhaust pipe (280) are connected. The gas supply pipe (275) will be described below. The ventilation exhaust pipe (280) exhausts the air in the housing space (62) to the outside. The ventilation exhaust pipe (280) is provided with a ventilation exhaust valve (151). The ventilation exhaust valve (151) is an on-off valve including an electromagnetic valve.

An in-unit temperature sensor (55), an in-unit humidity sensor (56), and an oxygen sensor (57) are provided in the housing unit (61). These sensors will be described below.

### (3-2) Air control apparatus

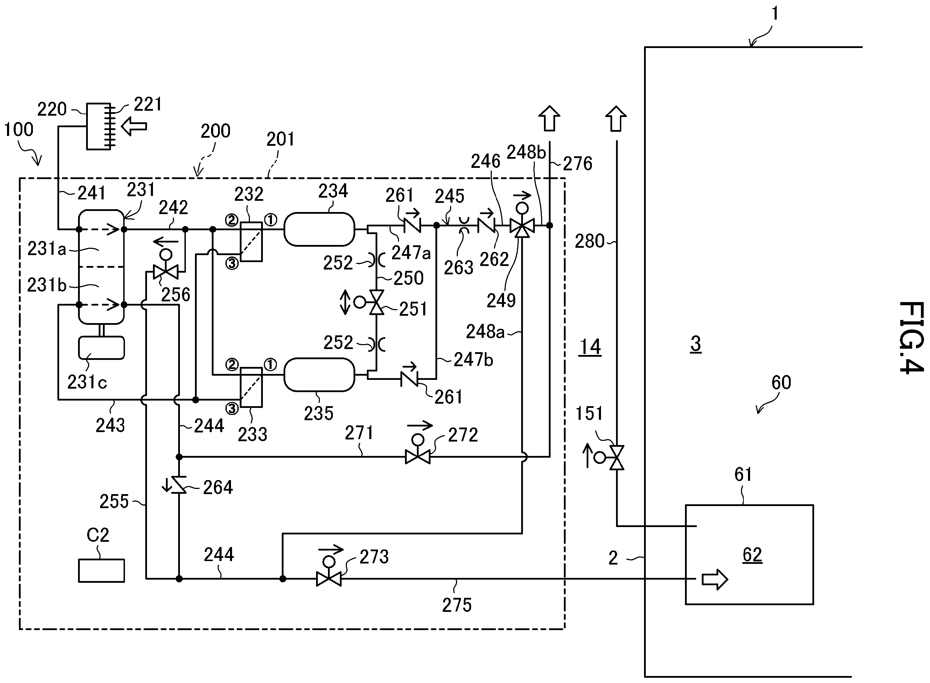

As illustrated in FIG. 4, the air control apparatus (50) adjusts the composition of the external air and supplies the adjusted gas to the housing space (62). The adjusted gas is an example of a first gas. The air control apparatus (50) includes a filter unit (220), a main unit (200), the gas supply pipe (275), a gas discharge pipe (276), and a second control unit (C2).

The air control apparatus (50) performs an adjustment by using a system of adsorption and desorption of gas molecules with a zeolite to obtain the adjusted gas to be supplied to the housing space (62). Specifically, the air control apparatus (50) is a gas separation apparatus of a so-called vacuum pressure swing adsorption (VPSA) type. The air control apparatus (50) separates exterior air (atmospheric air) into a nitrogen-enriched gas having a higher nitrogen concentration and a lower oxygen concentration than the atmospheric air and an oxygen-enriched gas having a lower nitrogen concentration and a higher oxygen concentration than the atmospheric air.

### (3-2-1) Filter unit and outside air pipe

The filter unit (220) is a member formed into a box shape. The filter unit (220) includes an air filter (221). The air filter (221) is a filter configured to capture dust, salt, and the like contained in the exterior air. The air filter (221) of the present embodiment is an air-permeable, waterproof membrane filter.

The filter unit (220) is connected to the main unit (200) via an outside air pipe (241). The outside air pipe (241) has one end connected to the filter unit (220). The other end of the outside air pipe (241) is connected to an air pump (231) described below. The outside air pipe (241) guides the exterior air (atmospheric air) after passing through the air filter (221), as air to be treated, to the air pump (231).

### (3-2-2) Main unit

The main unit (200) is installed outside the storage (1). The main unit (200) includes the air pump (231), a first adsorption vessel (234), a second adsorption vessel (235), a first switching valve (232), a second switching valve (233), and a unit case (201) housing these. The unit case (201) houses an introduction pipe (242), a suction pipe (243), a first gas pipe (244), and a second gas pipe (245).

### (3-2-3) Air pump

The air pump (231) includes a compression-side pump (231a), a decompression-side pump (231b), and a drive motor (231c). Each of the compression-side pump (231a) and the decompression-side pump (231b) sucks and discharges air. The compression-side pump (231a) and the decompression-side pump (231b) are connected to a drive shaft of the single drive motor (231c). That is, the single drive motor (231c) drives the compression-side pump (231a) and the decompression-side pump (231b).

The compression-side pump (231a) has a suction port connected to the other end of the outside air pipe (241). The compression-side pump (231a) has a discharge port connected to one end of the introduction pipe (242). The compression-side pump (231a) supplies the air to be treated, which is sucked from the outside air pipe (241), to the first adsorption vessel (234) and the second adsorption vessel (235) through the introduction pipe (242).

The decompression-side pump (231b) has a suction port connected to the suction pipe (243). The decompression-side pump (231b) has a discharge port connected to the first gas pipe (244). The decompression-side pump (231b) discharges the gas sucked from the first adsorption vessel (234) and the second adsorption vessel (235) through the suction pipe (243), to the first gas pipe (244).

### (3-2-4) Introduction pipe

The introduction pipe (242) is a pipe that guides the gas to be treated, which is discharged from the compression-side pump (231a), to the first adsorption vessel (234) and the second adsorption vessel (235). The introduction pipe (242) has one end connected to the discharge port of the compression-side pump (231a). The introduction pipe (242) branches into two branch pipes on the other end side. One of the branch pipes is connected to the first switching valve (232), and the other branch pipe is connected to the second switching valve (233).

### (3-2-5) Suction pipe

The suction pipe (243) is a pipe that guides the gas flowing out from the first adsorption vessel (234) and the second adsorption vessel (235) to the decompression-side pump (231b). The suction pipe (243) has one end connected to the suction port of the decompression-side pump (231b). The suction pipe (243) branches into two branch pipes on the other end side. One of the branch pipes is connected to the first switching valve (232), and the other branch pipe is connected to the second switching valve (233).

### (3-2-6) First gas pipe

The first gas pipe (244) is a pipe through which the nitrogen-enriched gas discharged from the decompression-side pump (231b) flows. The first gas pipe (244) has one end connected to the discharge port of the decompression-side pump (231b). The other end of the first gas pipe (244) is connected to the gas supply pipe (275).

The first gas pipe (244) is provided with a check valve (264). The check valve (264) allows a gas flow only in the direction from one end to the other end of the first gas pipe (244), and blocks a gas flow in the reverse direction.

### (3-2-7) Switching valve

The first switching valve (232) and the second switching valve (233) are switching valves each having three ports. The first switching valve (232) and the second switching valve (233) are each configured to switch between a first state in which a first port communicates with a second port so as to be blocked from a third port (a state indicated by the solid line in FIG. 4) and a second state in which the first port communicates with the third port so as to be blocked from the second port (a state indicated by the broken line in FIG. 4).

The first switching valve (232) has the first port connected to one end of the first adsorption vessel (234). The first switching valve (232) has the second port connected to one of the branch pipes of the introduction pipe (242), and has the third port connected to one of the branch pipes of the suction pipe (243). The first switching valve (232) switches between a state in which the first adsorption vessel (234) is connected to the compression-side pump (231a) and a state in which the first adsorption vessel (234) is connected to the decompression-side pump (231b).

The second switching valve (233) has the first port connected to one end of the second adsorption vessel (235). The second switching valve (233) has the second port connected to one of the branch pipes of the introduction pipe (242), and has the third port connected to one of the branch pipes of the suction pipe (243). The second switching valve (233) switches between a state in which the second adsorption vessel (235) is connected to the compression-side pump (231a) and a state in which the second adsorption vessel (235) is connected to the decompression-side pump (231b).

### (3-2-8) Adsorption vessel

The first adsorption vessel (234) and the second adsorption vessel (235) are members each including a cylindrical container having both ends closed and an adsorbent filling the container. The adsorption vessel (234, 235) uses the adsorbent in order to separate air to be treated (exterior air in the present embodiment) into an oxygen-enriched gas and a nitrogen-enriched gas.

The adsorbent filling each adsorption vessel (234, 235) has a property of adsorbing nitrogen and water (water vapor) in air to be treated in a pressurized state with a pressure higher than the atmospheric pressure, and desorbing nitrogen and water in a decompressed state with a pressure lower than the atmospheric pressure. The adsorbent having such a property is, for example, a porous zeolite with pores having a diameter smaller than the diameter of a nitrogen molecule (3.0 angstrom) and larger than the diameter of an oxygen molecule (2.8 angstrom).

### (3-2-9) Second gas pipe

The second gas pipe (245) includes a trunk pipe (246), a first branch pipe (247a), a second branch pipe (247b), a supply side branch pipe (248a), and a discharge side branch pipe (248b). The second gas pipe (245) is provided with an oxygen switching valve (249).

The first branch pipe (247a) is a pipe configured to connect the other end of the first adsorption vessel (234) to one end of the trunk pipe (246). The second branch pipe (247b) is a pipe configured to connect the other end of the second adsorption vessel (235) to one end of the trunk pipe (246). The first branch pipe (247a) and the second branch pipe (247b) are each provided with a check valve (261). Each check valve (261) allows an air flow in the direction of flowing out from the associated adsorption vessel (234, 235) and restricts an air flow in the reverse direction.

As described above, the trunk pipe (246) has the one end to which the first branch pipe (247a) and the second branch pipe (247b) are connected. The trunk pipe (246) has the other end connected to the oxygen switching valve (249). The trunk pipe (246) is provided with an orifice (263) and a check valve (262) in sequence from one end to the other end of the trunk pipe (246). The check valve (262) allows an air flow from one end to the other end of the trunk pipe (246) and restricts an air flow in the reverse direction.

The supply side branch pipe (248a) has one end connected to the oxygen switching valve (249), and has the other end connected to one end of the gas supply pipe (275). The supply side branch pipe (248a) forms a supply passage for introduction of the oxygen-enriched gas to the inside of the housing unit (61). The discharge side branch pipe (248b) has one end connected to the oxygen switching valve (249), and has the other end connected to one end of the gas discharge pipe (276). The discharge side branch pipe (248b) forms a discharge passage for discharge of the oxygen-enriched gas to the outside of the unit case (201).

The oxygen switching valve (249) is a three-way valve. As described above, the trunk pipe (246), the supply side branch pipe (248a), and the discharge side branch pipe (248b) are connected to the oxygen switching valve (249). The oxygen switching valve (249) switches between a first state in which the trunk pipe (246) communicates with the supply side branch pipe (248a) so as to be restricted from the discharge side branch pipe (248b) and a second state in which the trunk pipe (246) communicates with the discharge side branch pipe (248b) so as to be restricted from the supply side branch pipe (248a).

The oxygen switching valve (249) is a switching mechanism that switches the second gas pipe (245) between an introduction state and a discharge state. When the oxygen switching valve (249) is in the first state, the second gas pipe (245) is in the introduction state, and the oxygen-enriched gas is introduced into the housing unit (61) through the supply side branch pipe (248a). When the oxygen switching valve (249) is in the second state, the second gas pipe (245) is in the discharge state, and the oxygen-enriched gas is discharged to the outside of the unit case (201) through the discharge side branch pipe (248b).

### (3-2-10) Purge pipe

A purge pipe (250) is connected to each of the first branch pipe (247a) and the second branch pipe (247b) of the second gas pipe (245). The purge pipe (250) has one end connected to the first branch pipe (247a) and the other end connected to the second branch pipe (247b). The one end of the purge pipe (250) is connected to the first branch pipe (247a) between the first adsorption vessel (234) and the check valve (261). The other end of the purge pipe (250) is connected to the second branch pipe (247b) between the second adsorption vessel (235) and the check valve (261).

The purge pipe (250) is provided with a purge valve (251). The purge valve (251) is an on-off valve including an electromagnetic valve. The purge valve (251) is opened to equalize the pressures of the first adsorption vessel (234) and the second adsorption vessel (235). An orifice (252) is provided on each side of the purge valve (251) of the purge pipe (250).

### (3-2-11) Exhaust connection pipe

An exhaust connection pipe (271) is connected to the first gas pipe (244). The exhaust connection pipe (271) has one end connected to the first gas pipe (244) and the other end connected to the second gas pipe (245). The one end of the exhaust connection pipe (271) is connected to the first gas pipe (244) between the decompression-side pump (231b) and the check valve (264). The other end of the exhaust connection pipe (271) is connected to one end of the gas discharge pipe (276).

The exhaust connection pipe (271) is provided with a gas discharge valve (272). The gas discharge valve (272) is an on-off valve including an electromagnetic valve. When the gas discharge valve (272) is opened, the nitrogen-enriched gas flowing through the first gas pipe (244) is discharged to the outside of the unit case (201). The gas discharge valve (272) is a flow rate adjusting mechanism that adjusts the flow rate of the nitrogen-enriched gas flowing through the exhaust connection pipe (271). The flow rate of the nitrogen-enriched gas discharged through the exhaust connection pipe (271) to the outside of the unit case (201) is changed by adjusting the time during which the gas discharge valve (272) is opened or closed.

### (3-2-12) Gas supply pipe

The gas supply pipe (275) supplies the adjusted gas to the housing unit (61). As described above, the gas supply pipe (275) has one end to which the first gas pipe (244) and the supply side branch pipe (248a) of the second gas pipe (245) are connected. The gas supply pipe (275) extends to the outside of the unit case (201). The other end of the gas supply pipe (275) is connected to the inside of the housing unit (61) disposed in the interior space (3). Thus, the adjusted gas flows into the housing space (62). The gas supply pipe (275) is an example of a gas supply path (275).

The gas supply pipe (275) is provided with a gas supply valve (273). The gas supply valve (273) is an on-off valve including an electromagnetic valve.

### (3-2-13) Gas discharge pipe

As described above, the gas discharge pipe (276) has one end to which the discharge side branch pipe (248b) of the second gas pipe (245) and the exhaust connection pipe (271) are connected. The gas discharge pipe (276) extends to the outside of the unit case (201). The other end of the gas discharge pipe (276) is opened to the outside of the unit case (201). The gas discharge pipe (276) is a pipe configured to discharge a gas flowing in from one end of the gas discharge pipe (276) to the outside of the unit case (201).

### (3-2-14) Bypass pipe

A bypass connection pipe (255) is connected to the introduction pipe (242). The bypass connection pipe (255) is a pipe configured to enable exterior air to bypass the first adsorption vessel (234) and the second adsorption vessel (235) to supply the exterior air to the housing space (62) of the housing unit (61). The bypass connection pipe (255) has one end connected to the introduction pipe (242) between the branch point of the introduction pipe (242) and the compression-side pump (231a). The bypass connection pipe (255) has the other end connected to the first gas pipe (244) downstream of the check valve (264).

The bypass connection pipe (255) is provided with a bypass on-off valve (256). The bypass on-off valve (256) is an on-off valve including an electromagnetic valve. The bypass on-off valve (256) is opened when the exterior air discharged by the compression-side pump (231a) is supplied to the housing space (62) without changing the composition of the exterior air.

### (3-2-15) Sensor

The air control apparatus (50) includes the in-unit temperature sensor (55), the in-unit humidity sensor (56), and the oxygen sensor (57). The in-unit temperature sensor (55) detects the air temperature of the housing space (62). The in-unit humidity sensor (56) detects the humidity of the housing space (62). The oxygen sensor (57) detects the oxygen concentration of the housing space (62). The in-unit temperature sensor (55) is disposed substantially at the center of the housing space (62).

### (3-2-16) Second control unit

The second control unit (C2) includes a micro processor, an electric circuit, and an electronic circuit. The micro processor includes a central processing unit (CPU), a memory, a communication interface, an analog input/output, and a contact input/output interface. The memory stores various programs to be executed by the CPU and data used by the programs.

As illustrated in FIG. 5, the second control unit (C2) receives measurement values from the in-unit temperature sensor (55), the in-unit humidity sensor (56), and the oxygen sensor (57). The second control unit (C2) controls various devices of the air control apparatus (50). Specifically, the second control unit (C2) controls the air pump (231), the first switching valve (232), the second switching valve (233), the oxygen switching valve (249), the ventilation exhaust valve (151), the purge valve (251), the bypass on-off valve (256), the gas discharge valve (272), and the gas supply valve (273) of the air control apparatus (50).

The second control unit (C2) receives measurement values detected by the in-unit temperature sensor (55), the in-unit humidity sensor (56), and the oxygen sensor (57).

### (4) Cooling mechanism

As illustrated in FIG. 1, the air control apparatus (50) includes the cooling mechanism (70). The cooling mechanism (70) cools the adjusted gas in the gas supply pipe (275) by using the air in the interior space (3). The cooling mechanism (70) is provided in the gas supply pipe (275). The cooling mechanism (70) of the present embodiment is the first pipe portion (70) forming a part of the gas supply pipe (275). The first pipe portion (70) is formed of a material having higher thermal conductivity than a portion forming the gas supply pipe (275) excluding the first pipe portion (70).

Specifically, the gas supply pipe (275) includes the first pipe portion (70) made of a metal and a second pipe portion (90) made of a resin. The second pipe portion (90) and the first pipe portion (70) are sequentially connected from the air control apparatus (50) toward the housing unit (61), so that the adjusted gas flowing into the gas supply pipe (275) sequentially flows through the second pipe portion (90) and the first pipe portion (70).

The first pipe portion (70) is partially or entirely disposed in the interior space (3). The air in the interior space (3) exchanges heat with the adjusted gas in the first pipe portion (70) via the first pipe portion (70). That is, the first pipe portion (70) is cooled by the air in the interior space (3) cooled by the refrigeration apparatus (10), and thus the adjusted gas flowing in the first pipe portion (70) is cooled. The longer the first pipe portion (70) is, the closer the temperature of the adjusted gas flowing through the first pipe portion (70) is to the air temperature of the interior space (3). The smaller the thickness of the first pipe portion (70) (that is, the distance between the inner surface and the outer surface in the radial direction of the first pipe portion (70)) is, the more easily the air temperature in the interior space (3) propagates into the first pipe portion (70) and thus the more quickly the adjusted gas flowing through the first pipe portion (70) is cooled.

### (5) Gas-liquid separator

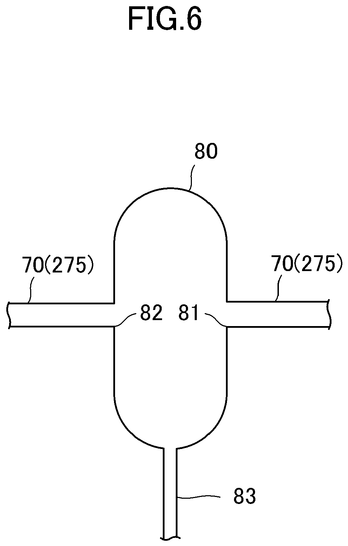

As illustrated in FIGS. 1 and 6, the storage system (60) includes a gas-liquid separator (80). The gas-liquid separator (80) separates the adjusted gas flowing through the gas supply pipe (275) and a liquid flowing together with the adjusted gas. For example, due to dew condensation or the like generated by cooling air, water is mixed with the adjusted gas and flows in the gas supply pipe (275) toward the housing unit (61). The gas-liquid separator (80) separates and discharges such water from the adjusted gas before flowing into the housing unit (61).

Specifically, the gas-liquid separator (80) is disposed downstream in the flow direction of the adjusted gas in the first pipe portion (70) of the gas supply pipe (275). Here, the term "downstream" means a position downstream of the central position of the length between the upstream end and the downstream end of the first pipe portion (70). In other words, in the first pipe portion (70), the gas-liquid separator (80) is provided at a position closer to the housing unit (61) than to the second pipe portion (90).

The gas-liquid separator (80) is formed into a vertically long tubular shape with a closed lower end. The gas-liquid separator (80) has a side surface on which an inflow side end (81) and an outflow side end (82) are formed. The inflow side end (81) and the outflow side end are connected to the first pipe portion (70). The inflow side end (81) is disposed upstream of the outflow side end (82) in the flow direction of the adjusted gas. The gas-liquid separator (80) has a lower end connected to a drain pipe (83). Water separated in the gas-liquid separator (80) flows into the drain pipe (83). The water flowing through the drain pipe (83) flows out to a reservoir (not illustrated).

### (6) Operation of air control apparatus

The air control apparatus (50) of the present embodiment performs an oxygen concentration reducing operation and an oxygen supply operation. The oxygen concentration reducing operation is an operation of reducing the oxygen concentration of the air in the housing space (62). The oxygen supply operation is an operation of increasing the oxygen concentration of the air in the housing space (62).

The air control apparatus (50) repeats a first action and a second action alternately to separate exterior air into a nitrogen-enriched gas (first gas) and an oxygen-enriched gas (second gas). The air control apparatus (50) repeats each of the first action and the second action alternately for a predetermined switching period (for example, 14 seconds). The second control unit (C2) controls the first switching valve (232) and the second switching valve (233) so that the first action and the second action are alternately performed.

### (6-1) First action

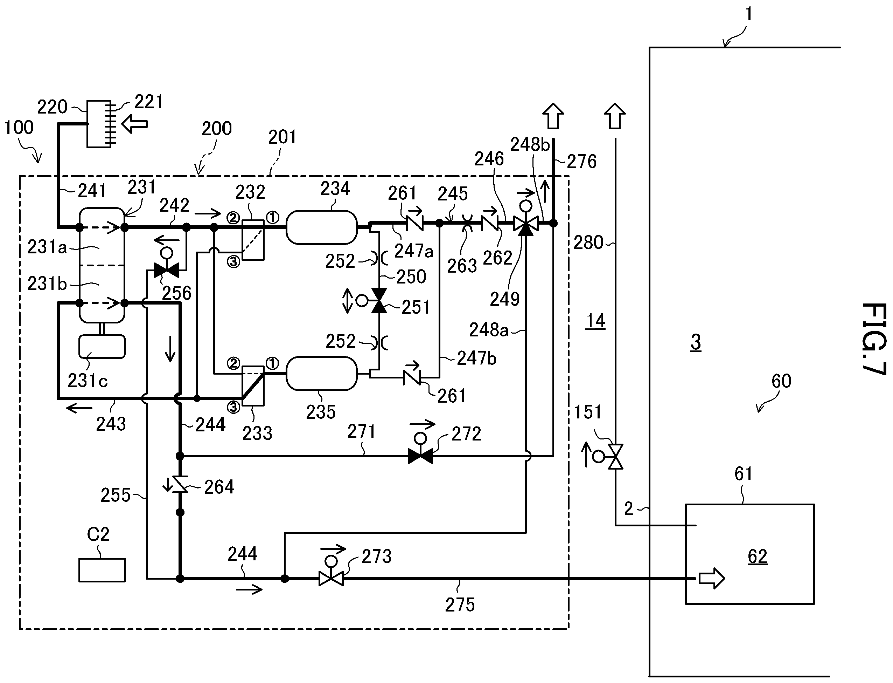

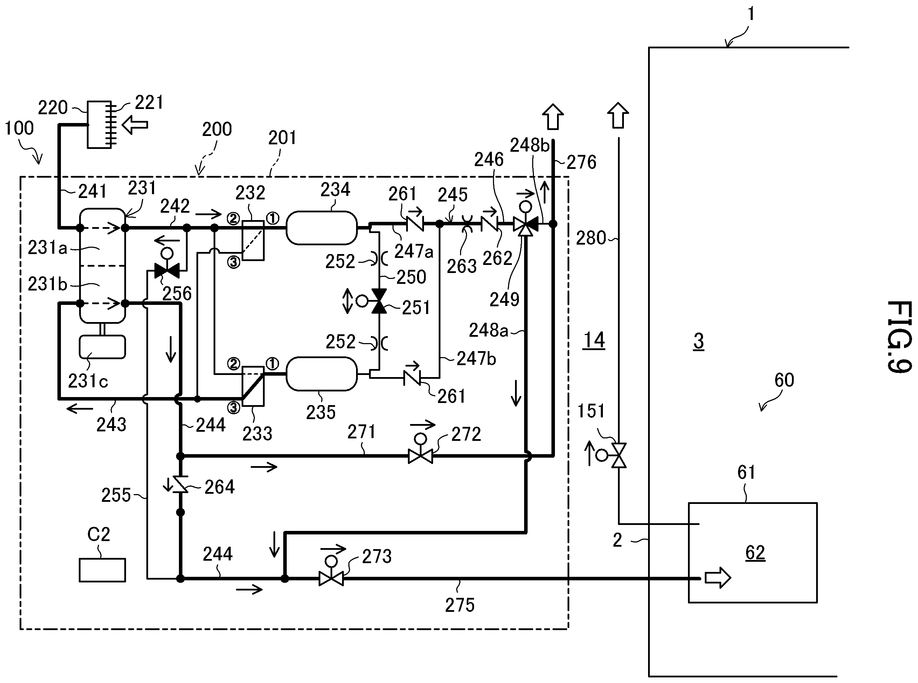

As illustrated in FIGS. 7 and 9, in the first action, the first switching valve (232) is set to the first state, and the second switching valve (233) is set to the second state. In the first action, the purge valve (251) and the bypass on-off valve (256) are held closed. In the first action, the air pump (231) operates to perform an adsorption action for the first adsorption vessel (234) and a desorption action for the second adsorption vessel (235).

The compression-side pump (231a) sucks and compresses exterior air (atmospheric air) from the outside air pipe (241), and supplies the compressed exterior air to the first adsorption vessel (234). In the first adsorption vessel (234), nitrogen and water (water vapor) contained in the supplied exterior air are adsorbed by the adsorbent. As a result, in the first adsorption vessel (234), an oxygen-enriched gas is produced that has a lower nitrogen concentration and a higher oxygen concentration than the exterior air. The oxygen-enriched gas flows out from the first adsorption vessel (234) to the first branch pipe (247a) of the second gas pipe (245).

Meanwhile, the decompression-side pump (231b) sucks the gas from the second adsorption vessel (235). In the second adsorption vessel (235), the inside pressure is reduced to desorb nitrogen and water from the adsorbent. As a result, in the second adsorption vessel (235), a nitrogen-enriched gas is produced that has a higher nitrogen concentration and a lower oxygen concentration than the exterior air. The nitrogen-enriched gas flows from the second adsorption vessel (235) into the suction pipe (243), and is sucked into the decompression-side pump (231b). The decompression-side pump (231b) compresses and discharges the sucked nitrogen-enriched gas to the first gas pipe (244).

### (6-2) Second action

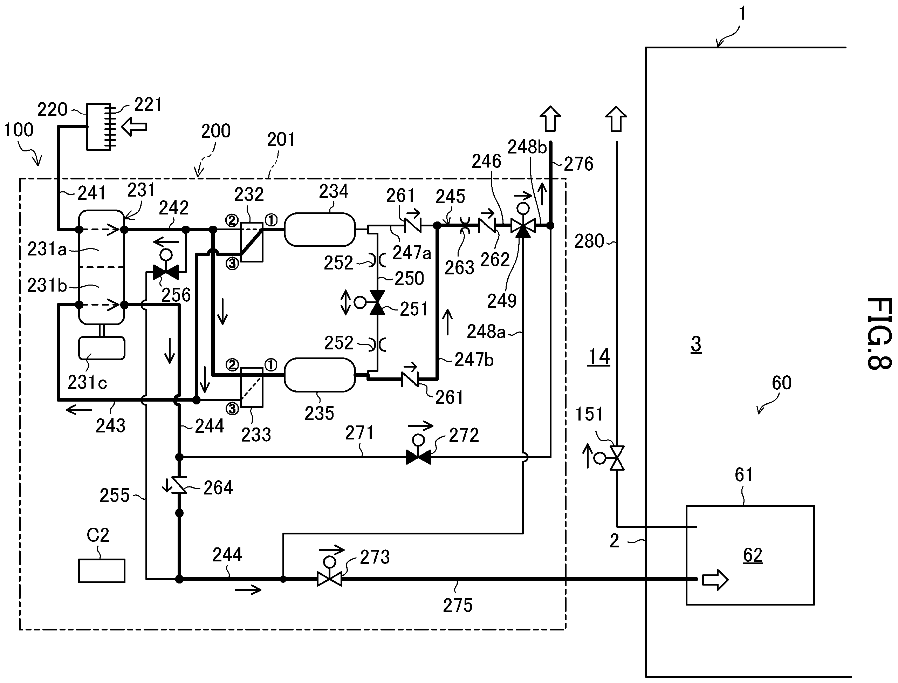

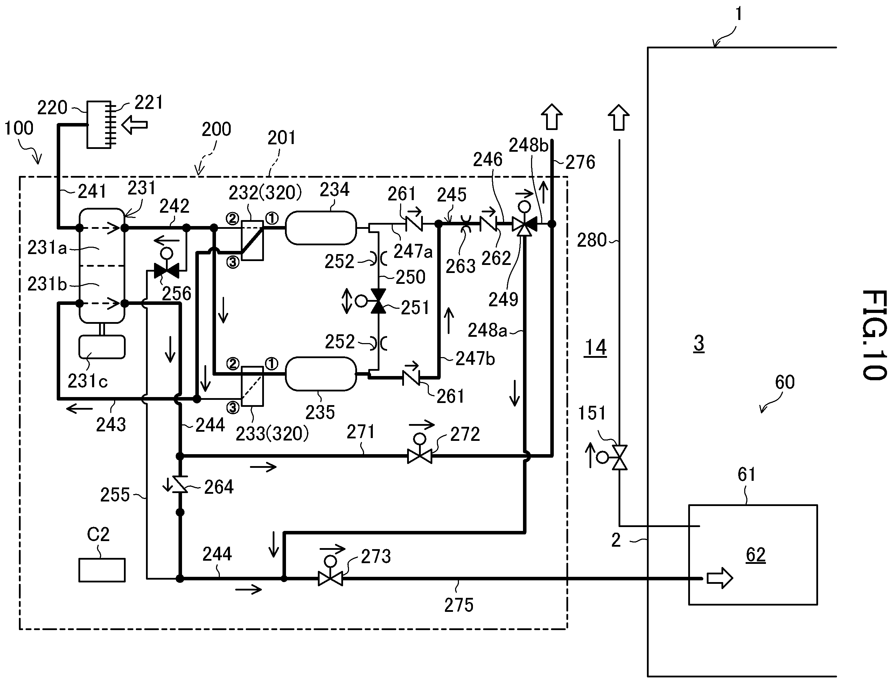

As illustrated in FIGS. 8 and 10, in the second action, the first switching valve (232) is set to the second state, and the second switching valve (233) is set to the first state. In the second action, the purge valve (251) and the bypass on-off valve (256) are held closed. In the second action, the air pump (231) operates to perform a desorption action for the first adsorption vessel (234) and an adsorption action for the second adsorption vessel (235).

The compression-side pump (231a) sucks and compresses exterior air (atmospheric air) from the outside air pipe (241), and supplies the compressed exterior air to the second adsorption vessel (235). In the second adsorption vessel (235), nitrogen and water (water vapor) contained in the supplied exterior air are adsorbed by the adsorbent. As a result, in the second adsorption vessel (235), an oxygen-enriched gas is produced that has a lower nitrogen concentration and a higher oxygen concentration than the exterior air. The oxygen-enriched gas flows out from the second adsorption vessel (235) to the second branch pipe (247b) of the second gas pipe (245).

Meanwhile, the decompression-side pump (231b) sucks the gas from the first adsorption vessel (234). In the first adsorption vessel (234), the inside pressure is reduced to desorb nitrogen and water from the adsorbent. As a result, in the first adsorption vessel (234), a nitrogen-enriched gas is produced that has a higher nitrogen concentration and a lower oxygen concentration than the exterior air. The nitrogen-enriched gas flows from the first adsorption vessel (234) into the suction pipe (243), and is sucked into the decompression-side pump (231b). The decompression-side pump (231b) compresses and discharges the sucked nitrogen-enriched gas to the first gas pipe (244).

### (6-3) Oxygen concentration reducing operation

The oxygen concentration reducing operation is an operation of supplying the nitrogen-enriched gas to the housing space (62) to reduce the oxygen concentration of the air in the housing space (62).

As illustrated in FIGS. 7 and 8, in the oxygen concentration reducing operation, the gas supply valve (273) is held in an open state, and the gas discharge valve (272) is held in a closed state. In the oxygen concentration reducing operation, the oxygen switching valve (249) is set to the second state. As a result, the trunk pipe (246) communicates with the discharge side branch pipe (248b), and the second gas pipe (245) comes into a discharge state.

In the oxygen concentration reducing operation, the nitrogen-enriched gas discharged from the decompression-side pump (231b) to the first gas pipe (244) flows into the housing unit (61) through the gas supply pipe (275). Meanwhile, the oxygen-enriched gas flowing from the first adsorption vessel (234) or the second adsorption vessel (235) into the second gas pipe (245) passes through the trunk pipe (246) and the discharge side branch pipe (248b) in sequence, and then flows out to the outside of the unit case (201) through the gas discharge pipe (276).

In the oxygen concentration reducing operation, the ventilation exhaust valve (151) is held in an open state, and the air in the housing space (62) flows out to the outside of the housing unit (61) through the ventilation exhaust pipe (280). Therefore, the air in the housing space (62) is gradually replaced by the nitrogen-enriched gas, and the oxygen concentration of the air in the housing space (62) gradually decreases.

### (6-4) Oxygen supply operation

The oxygen supply operation is an operation of supplying the oxygen-enriched gas to the housing space (62) to increase the oxygen concentration of the air in the housing space (62).

As illustrated in FIGS. 9 and 10, in the oxygen supply operation, the gas supply valve (273) is held in the open state, and the gas discharge valve (272) is held in an open state, or opened and closed. In the oxygen supply operation, the oxygen switching valve (249) is set to the first state. As a result, the trunk pipe (246) communicates with the supply side branch pipe (248a), and the second gas pipe (245) comes into an introduction state.

In the oxygen supply operation, a part of the nitrogen-enriched gas discharged from the decompression-side pump (231b) to the first gas pipe (244) flows out to the outside of the first casing (2) through the exhaust connection pipe (271) and the gas discharge pipe (276) in sequence, and the rest flows into the housing unit (61) through the gas supply pipe (275). Meanwhile, the oxygen-enriched gas flowing from the first adsorption vessel (234) or the second adsorption vessel (235) into the second gas pipe (245) passes through the trunk pipe (246) and the supply side branch pipe (248a) in sequence, then flows into the gas supply pipe (275), and flows into the housing unit (61). Thus, in the oxygen supply operation, a part of the nitrogen-enriched gas and the entire oxygen-enriched gas are supplied to the housing space (62).

In the oxygen supply operation, the ventilation exhaust valve (151) is held in the open state, and the air in the housing space (62) flows out from the ventilation exhaust pipe (280) to the outside of the housing space (62). Therefore, the air in the housing space (62) is gradually replaced by the oxygen-enriched gas, and the oxygen concentration of the air in the housing space (62) gradually increases.

### (7) Characteristics

### (7-1) Characteristic 1

The storage system (60) of the present embodiment is provided in the storage (1) in which the air in the interior space (3) inside the storage body (2) is cooled by the refrigeration apparatus (10). The storage system (60) includes: the housing unit (61) being disposed inside the interior space (3) and forming the housing space (62) in which a storage object is to be stored; the air control apparatus (50) configured to adjust the composition of air to be supplied to the housing space (62); the gas supply pipe (275) configured to supply the first gas containing air having a composition adjusted by the air control apparatus (50) to the housing space (62); and the cooling mechanism (70) provided in a part of the gas supply pipe (275) and configured to cool the adjusted gas (first gas).

In the present embodiment, the adjusted gas cooled by the cooling mechanism (70) can be supplied to the housing space (62). Thus, the air temperature in the housing space (62) can be controlled to a more desirable temperature than in the case of cooling the air in the housing space (62) by using only the air in the interior space (3) cooled by the refrigeration apparatus (10).

### (7-2) Characteristic 2

The cooling mechanism (70) of the present embodiment cools the adjusted gas (first gas) in the gas supply pipe (275) by using the air in the interior space (3). The cooling mechanism (70) transmits the (cooling) heat of the cooled air in the interior space (3) to the first gas in the gas supply pipe (275), and thus the first gas can be cooled. Thus, the cooling mechanism (70) does not need to be provided with a special apparatus, and can easily cool the first gas. In addition, the number of components and the manufacturing cost of the cooling mechanism (70) can be reduced.

### (7-3) Characteristic 3

The cooling mechanism (70) of the present embodiment includes the first pipe portion (70) forming a part of the gas supply pipe (275). The first pipe portion (70) is formed of a material having a higher thermal conductivity than a portion forming the gas supply pipe (275) excluding the first pipe portion (70). Thus, in the first pipe portion (70), cooling of the first gas is promoted by the cooled air in the interior space (3). Thus, the first gas can be easily cooled by using a part of the gas supply path (275).

### (7-4) Characteristic 4

The cooling mechanism (70) of the present embodiment includes the first pipe portion (70) made of a metal and forming at least a part of the gas supply pipe (275). The pipe made of a metal has relatively high thermal conductivity between the outside and the inside of the pipe, and therefore cooling of the first gas in the first pipe portion (70) can be promoted by the cooled interior air.

### (7-5) Characteristic 5

The cooling mechanism (70) of the present embodiment further includes the gas-liquid separator (80) configured to separate the first gas flowing through the gas supply pipe (275) and a liquid. The gas-liquid separator (80) is disposed downstream in the flow direction of the first gas in the cooling mechanism (70).

Thus, it is possible to suppress inflow of water generated by cooling the first gas in the gas supply pipe (275) into the housing space (62). Thus, it is possible to suppress wetting of a storage object in the housing space (62) and suppress deterioration of the quality of the storage object.

### (7-6) Characteristic 6

The air control apparatus (50) of the present embodiment performs an adjustment by using a system of adsorption and desorption of gas molecules with a zeolite to obtain the first gas to be supplied to the housing space (62). As the first gas, a nitrogen-enriched gas or air having a relatively high humidity can be supplied to the housing space (62) by using the system of adsorption and desorption of gas molecules with a zeolite.

### (7-7) Characteristic 7

The storage body (2) of the present embodiment is formed of a material having a higher heat insulation property than the housing unit (61). The material having a relatively high heat insulation property is used in the storage body (2), and therefore heat transfer is suppressed between inside air and outside air of the storage body (2). Temperature rise of the interior air cooled by the refrigeration apparatus (10) is thus suppressed, and in addition, the housing space (62) and the interior space (3) are separated by only the resin sheet, so that the air temperature in the housing space (62) can be lowered relatively quickly.

### (7-8) Characteristic 8

The housing unit (61) of the present embodiment includes a transparent material that enables visual recognition of the inside of the housing space (62). Thus, the state of a storage object in the housing space (62) can be visually recognized from the outside of the housing unit (61).

### (8) Modifications

Hereinafter, configurations different from that of the interior cooling system or the storage system of the above embodiment will be described.

### (8-1) Modification 1

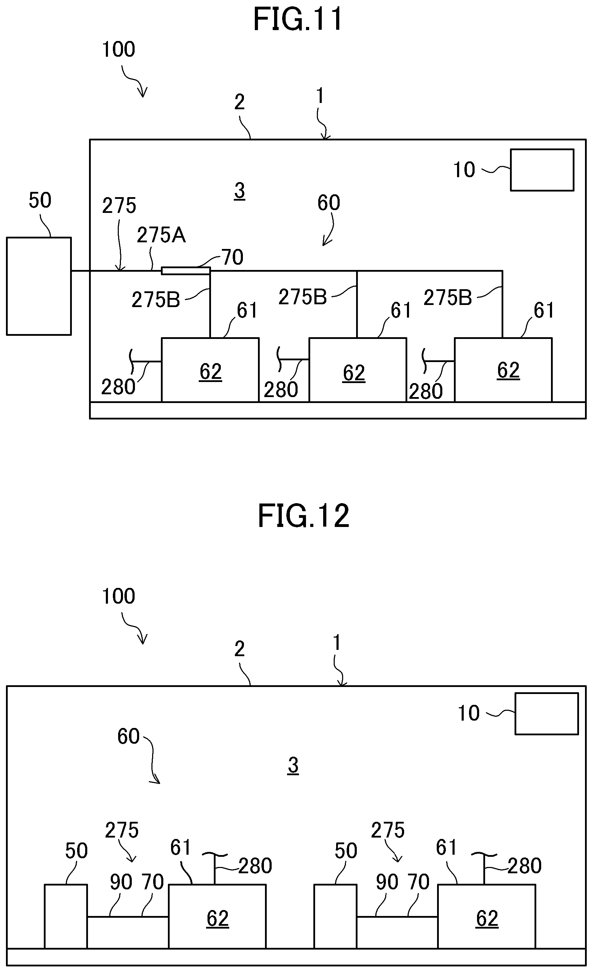

As illustrated in FIG. 11, a storage system (60) of Modification 1 includes a plurality of housing units (61) disposed in an interior space (3). A gas supply pipe (275) of the storage system (60) includes a first flow path (275A) and a plurality of second flow paths (275B). The gas supply pipe (275) is formed so as to branch from the first flow path (275A) into the plurality of second flow paths (275B). Specifically, the first flow path (275A) has one end connected to an air control apparatus (50). The second flow paths (275B) have ends connected to the other end of the first flow path (275A) respectively, and have other ends connected to the plurality of housing units (61) respectively.

The first flow path (275A) is provided with a first pipe portion (70). The first pipe portion (70) is provided downstream in the first flow path (275A). The term "downstream" means a position downstream of the central position between the upstream end and the downstream end of the first flow path (275A). Alternatively, the first pipe portion (70) may be provided in the entire first flow path (275A) disposed in the interior space (3).

As described above, the storage system (60) of Modification 1 includes the plurality of housing units (61), and thus the plurality of housing units (61) can be individually opened and closed. Thus, for example, in the case of taking out a specific storage object from the storage (1), only the housing unit (61) housing the target storage object needs to be opened, and the other housing units (61) are closed. As described above, even when one housing unit (61) is opened and closed, a change in air composition in the housing space (62) of the other housing units (61) can be suppressed, so that it is possible to suppress deterioration of the freshness and the quality of storage objects stored in the other housing units (61).

Therefore, for example, a plurality of kinds of storage objects can be stored in one storage (1), and there is no need to use one storage (1) for one kind of storage object. Therefore, for example, if the storage (1) storing a storage object includes a vacant space, another kind of storage object can be stored in the space, and thus the space of the storage (1) can be effectively used.

### (8-2) Modification 2

As illustrated in FIG. 12, an interior cooling system (100) of Modification 2 includes a plurality of storage systems (60) disposed in an interior space (3). Each storage system (60) of Modification 2 includes one air control apparatus (50) and one housing unit (61). In other words, pairs of one housing unit (61) and one air control apparatus (50) are disposed in the interior space (3).

As described above, the interior cooling system (100) of Modification 2 includes the plurality of storage systems (60), and thus can adjust air in the housing spaces (62) to different compositions. Thus, a plurality of kinds of storage objects under different storage conditions can be stored in one storage (1). Specifically, one air control apparatus (50) is connected to one housing unit (61), and therefore even when the air composition optimum for storage is different among a plurality of kinds of storage objects, the air in each housing space (62) can be adjusted to a composition suitable for each storage object by individually controlling a plurality of air control apparatus (50).

### (9) Other embodiments

In the above embodiment and Modifications, for example, the following configurations may be adopted.

For example, the cooling mechanism (70) may be provided in the entire gas supply pipe (275). Specifically, for example, the entire gas supply pipe (275) may be formed of the first pipe portion (70).

For example, the first pipe portion (70) may be formed of a metal such as copper, aluminum, or iron. The first pipe portion (70) only needs to be formed of a material having a relatively high thermal conductivity, and for example, may be made of glass. For example, the second pipe portion (90) may be formed of a resin such as a urethane resin. The second pipe portion (90) only needs to be formed of a material having lower thermal conductivity than the first pipe portion (70), and the material is not limited to a resin.

For example, the gas-liquid separator (80) may be disposed downstream of the cooling mechanism (70) in the flow direction of the first gas. In other words, for example, the gas-liquid separator (80) may be disposed between the downstream end of the first pipe portion (70) and the housing unit (61) in the gas supply pipe (275).

The air control apparatus (50) only needs to be a system of adsorption and desorption of gas molecules with a zeolite, and for example, may be a pressure swing adsorption (PSA) system. For example, the air control apparatus (50) may be a system of adsorption and desorption of gas molecules using a metal-organic framework.

The cooling mechanism (70) only needs to be capable of cooling the first gas in the gas supply pipe (275), and is not limited to a mechanism of cooling by using air in the interior space (3). For example, the cooling mechanism (70) may include a predetermined heat medium such as a refrigerant, water, or a brine. The first gas in the gas supply pipe (275) is cooled by heat exchange with the cooled heat medium.

The housing unit (61) only needs to be such that the inside can be visually recognized, and for example, may be formed of a transparent acrylic plate.

In Modification 1, for example, one air control apparatus (50) and each of the plurality of housing units (61) may be directly connected without the second flow path (275B). In this case, in the gas supply pipe (275), the number of the first flow paths (275A) connected to the air control apparatus (50) is equal to the number of housing units (61), and the adjusted gas is directly supplied from one air control apparatus (50) to each housing unit (61).

In Modification 2, for example, the plurality of housing units (61) may be connected to each storage system (60).

In the embodiment and Modification 1, for example, the main unit (200) of the air control apparatus (50) may be installed in the storage (1). In Modification 2, for example, the main unit (200) of the air control apparatus (50) may be installed outside the storage (1).

While the embodiment and Modifications are described above, it will be understood that various changes in form and details may be made without departing from the spirit and the scope of the claims. For example, the embodiment and Modifications described above may be appropriately combined or substituted as long as the target functions of the present disclosure are not impaired. The above descriptions of "first", "second",... are used to distinguish words and phrases to which these descriptions are given, and do not limit the number and the order of the words and the phrases.

### INDUSTRIAL APPLICABILITY

As described above, the present disclosure is useful for a storage system and an interior cooling system.

### REFERENCE SIGNS LIST

1: storage
2: storage body (first casing)
3: interior space (first space)
10: refrigeration apparatus
50: air control apparatus
60: storage system
61: housing unit (second casing)
62: housing space (second space)
70: cooling mechanism, first pipe portion
80: gas-liquid separator
100: interior cooling system
275: gas supply pipe (gas supply path)
275A: first flow path
275B: second flow path

## Claims

1. A storage system comprising:
a second casing (61) disposed in a first space (3), the second casing (61) forming a second space (62) in which a storage object is to be stored;
an air control apparatus (50) configured to adjust a composition of air to be supplied to the second space (62);
a gas supply path (275) configured to supply the second space (62) with a first gas including air having a composition adjusted by the air control apparatus (50); and
a cooling mechanism (70) provided in at least a part of the gas supply path (275), the cooling mechanism (70) configured to cool the first gas,
wherein the storage system is provided in a storage (1) in which air in the first space (3) in a first casing (2) is cooled by a refrigeration apparatus (10).

2. The storage system according to claim 1, wherein
the cooling mechanism (70) is configured to cool the first gas in the gas supply path (275) by using air in the first space (3).

3. The storage system according to claim 1 or 2, wherein
the cooling mechanism (70) includes a first pipe portion (70) forming a part of the gas supply path (275), and
the first pipe portion (70) is formed of a material having a higher thermal conductivity than a material forming the gas supply path (275) excluding the first pipe portion (70).

4. The storage system according to any one of claims 1 to 3, wherein
the cooling mechanism (70) includes the first pipe portion (70) made of a metal or glass, the first pipe portion (70) forming at least a part of the gas supply path (275).

5. The storage system according to any one of claims 1 to 4, further comprising a gas-liquid separator (80) configured to separate the first gas and a liquid flowing together with the first gas through the gas supply path (275),
the gas-liquid separator (80) disposed downstream in a flow direction of the first gas in the cooling mechanism (70), or the gas-liquid separator (80) disposed downstream of the cooling mechanism (70) in the flow direction of the first gas.

6. The storage system according to any one of claims 1 to 5, wherein
the air control apparatus (50) is configured to adjust the first gas to be supplied to the second space by using a system of adsorption and desorption of gas molecules with a zeolite or a metal-organic framework (MOF).

7. The storage system according to any one of claims 1 to 6, wherein
the first casing (2) is formed of a material having a higher heat insulation property than the second casing (61).

8. The storage system according to any one of claims 1 to 7, wherein
the second casing (61) includes a transparent material that enables visual recognition of an inside of the second space (62).

9. The storage system according to any one of claims 1 to 8, wherein
a plurality of the second casings (61) are disposed in the first space (3),
the gas supply path (275) includes:
a first flow path (275A) having one end connected to the air control apparatus (50); and
a plurality of second flow paths (275B) having ends connected to another end of the first flow path (275A) respectively, the plurality of second flow paths (275B) having other ends connected to the plurality of the second casings (61) respectively, and
the cooling mechanism (70) is provided in the first flow path (275A).

10. An interior cooling system comprising:
the storage system according to claim 1 or 2;
a first casing (2) forming the first space (3) in which the second casing (61) is disposed; and
a refrigeration apparatus (10) configured to cool air in the first space (3).

11. The interior cooling system according to claim 10, wherein
a plurality of the storage systems are provided in the first space (3).
